# EUROPEAN PATENT APPLICATION

(11) **EP 2 317 810 A1**
(43) Date of publication of application: **04.05.2011**
(21) Application number: 09306044.0
(22) Date of filing: 02.11.2009
(51) Int. Cl.: H04W 72/04, H04L 5/00

(54) **Signaling carrier aggregation by means of carrier indicators and UE-specific mapping rules to a mobile device in a radio communications network**

(71) Applicant: Alcatel Lucent, 75008 Paris (FR)
(72) Inventor: Gerlach, Christian G., 71254 Ditzingen (DE); Bakker, Matthew P.J., Canterbury CT2 9DB (GB); Lee, Jung A., Pittstown 08867 (US); Cheng, Fang-Chen, Randolph 07869 (US)
(74) Representative: Wetzel, Emmanuelle

(57) **Abstract**

The present invention relates to a method for signalling carrier aggregation in a radio communication network supporting a plurality of component carriers, at least two component carriers being available for communication between a network equipment and a user equipment, at least one component carrier supporting a control channel for signalling resources.

According to the present invention, the method comprises the steps of:
- generating at least one mapping rule for said user equipment, said mapping rules mapping values of said carrier indicator to one of said component carriers available for communication between said network equipment and said user equipment;
- forwarding said mapping rule to said user equipment;
- including a Carrier indicator in said control channel, the length of the carrier indicator being at most equal to the number of bits which would be required to signal the total number of component carriers available for the communication between the user equipment and the network equipment;
-determining at the user equipment one or more component carrier to be used by said user equipment based on said carrier indicator and on said mapping rule.

## Description

### BACKGROUND OF THE INVENTION

The present invention relates to a method for flexible signaling component carrier usage in carrier aggregation in a mobile or wireless communication network.

A spectral band used for communication in a cellular radio communication network is called a carrier, or in the context of the present invention component carrier. In radio communication networks like UMTS, WIMAX or LTE, one carrier represents a band between 1,4MHz and 20MHz inside the frequency band allocated by the regulation authorities to the radio communication network.

While usually one downlink carrier is at system initialization associated with one uplink carrier for a communication in a radio communication network, it may happen that one of the fixed associated carrier is subject to high interference or that one carrier is not be sufficient for certain types of services, leading to the idea of carrier aggregation.

Carrier aggregation allows for high flexibility in the carrier allocation. Flexible uplink/downlink carrier allocation is envisaged so that no more fixed pairs of uplink/downlink carriers are allocated for a communication but may vary on a sub-frame basis. Flexibility even goes further and results in using several carriers (simultaneously in the uplink or in the downlink) for communicating with one single user equipment having high bandwidth requirement. This solution provides in the context of carrier aggregation for bandwidth flexibility by ensuring - when needed - wider bandwidth. Carrier aggregation may consist in using contiguous carriers in the frequency band but may also consist in aggregating non-contiguous carriers providing for even more flexibility. The user and network equipments adapted to work under carrier aggregation conditions are able to send and receive simultaneously in different carrier components. Such equipment comprise for example broadband power amplifiers or several narrow band power amplifiers.

The carrier component allocation is performed by the network equipment (e-Node B in 3GPP LTE). This carrier component allocation is signaled to the user equipment This signaling usually happens in a downlink control channel port of a sub-frame sent on the corresponding component carrier(s) used for the communication. Also changes in selected component carriers during a communication need to be signaled.

A particular object of the present invention is to provide for an efficient signaling of the component carriers allocated for a communication to the parties of a communication on both sides of the air interface.

Another object of the invention is to provide corresponding network equipment and user equipment adapted to support the signaling.

### SUMMARY OF THE INVENTION

These objects, and others that appear below, are achieved by a method for synchronizing a radio communication system according to claim 1, a network equipment according to claim 10 and a user equipment according to claim. 12.

According to the present invention, the component carriers to be used for a communication between a user equipment and a network equipment are determined thanks to two elements. The first element consists of at least one mapping rule which is available at the user equipment and at the network equipment and the second element is a carrier indicator which is conveyed in a sub-frame on a control channel. According to the invention, the length of the carrier indicator is at most equal to the number of bits which would be required to signal the total number of component carriers available for the communication between the user equipment and the network equipment.

The method according to the present invention presents the advantage to limit the overhead required to signal the different component carriers allocated for a communication in the control channel of the respective component carriers. Indeed, the mobile or wireless communication network comprises a plurality of component carriers only a limited number of which are adapted for communication between a given user equipment and a given network equipment. This restriction is usually due to the limitation of the capabilities of some user equipments which have a limited bandwidth of operation. A straight forward signaling of the component carriers would consists in coding the information on the total number of component carriers available in the network and even much more if we want to address any combination of 2 and more component carriers which could be used for a communication in case of simultaneous allocation of one or several component carriers for one communication. The present invention reduces the signaling load based on user equipment / network equipment specific information on the equipment capabilities.

Another advantage of the present invention consists in ensuring a robust signaling when the control channel in a component carrier cannot be decoded due to interference while the data resources in the same component carrier are protected by inter-cell interference coordination, This is especially advantageous in the context of pico macro cell networks where the limited transmit power of the pico cell easily faces unrecoverable interference from a macro cell having a much higher transmit power. Even if inter cell interference coordination is foreseen so that data are protected, the control channel in a component carrier is not inter-cell interference protected. Being able to use a component carrier in the pico cell which do not experience interference from the macro cell enables it to transmit signaling information to a user equipment indicating him to operate in a different component carrier on which the control channel is subject to interference but On which the data portion is protected from interference by inter cell interference coordination.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a radio communication system where the method according to the present invention can be implemented;
- Figure 2 shows a multiple carriers system as well as the way of signaling and determining the allocated component carriers according to the present invention;
- Figure 3 shows a scenario with coexisting macro pico base station in which the implementation of the present invention is advantageous;
- Figure 4 shows a network equipment according io the present invention.
- Figure 5 shows a user equipment according to the present invention.

### DETAILED DESCRIPTION OF THE INVENTION

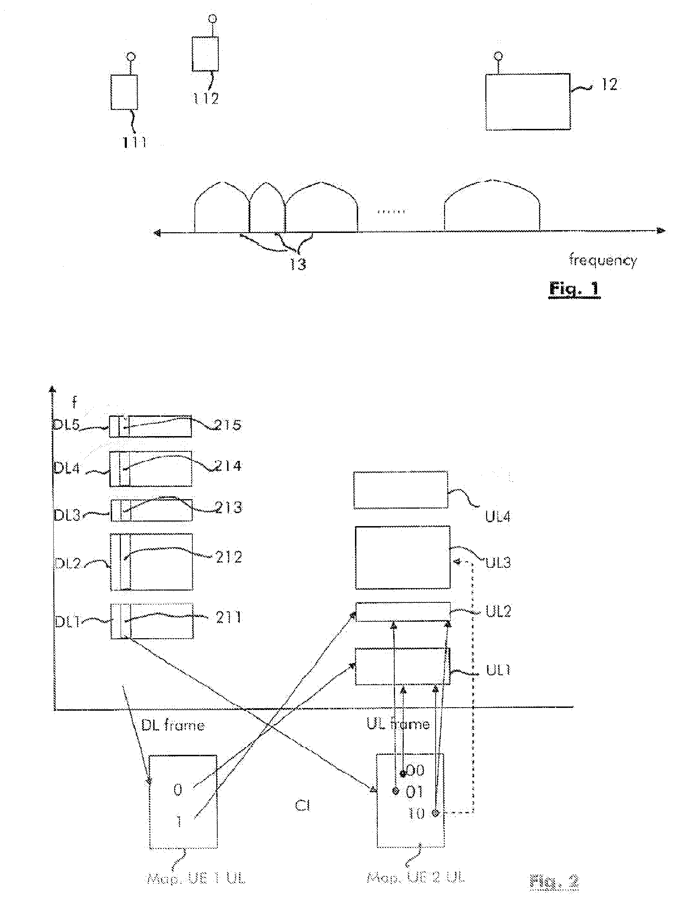

Figure 1 shows a radio communication system where the method according to the present invention can be implemented. The radio communication network comprises a plurality of user equipment 111, 112 and a plurality of network equipments 12, a single one or two of each being represented on figure 1 for sake of simplicity.

The total bandwidth available on the air interface and usable by user equipment 111, 112 and network equipment 12 comprise a plurality of component carriers 13, each having a predetermined bandwidth. User equipment 111, 112 are adapted by construction to communicate with network equipment 12 over at least a certain number of available component carriers. Network equipment 12 is adapted usually but not necessary to communicate over all component carriers constituting the total bandwidth or at least over a much larger number of available carriers than user equipments 111, 112.

The radio communication network may be any kind of known radio communication network foreseeing operation in different component carriers. Especially, interesting in the framework of the present invention is an OFDM based LTE network as currently defined at 3GPP for which carrier aggregation has been envisaged.

In an LTE radio communication network, the bandwidth of a single carrier has been defined between 1,4 MHz and 20MHz. Carrier aggregation would enable much flexibility to the carrier allocation and even a communication with a channel bandwidth of up to 100MHz leading to a higher spectrum flexibility to support different type of services on the one hand or other possible applications as spectrum sharing.

This higher flexibility requires a higher signaling towards the partners of a communication as user equipment 111, 112 and network equipment 12. This signaling will consists in indicating to user equipment 111, 112 and to network equipment 12 which component carrier(s) is/are allocated for communication in the uplink and in the downlink direction. Change in the component carrier allocation is also possible during the communication on a sub-frame base and needs to be signaled also to user equipment 111, 112 and to network equipment 12.

Figure 2 shows a multiple carriers system as well as the way of signaling and determining the allocated component carrier(s) according to the present invention.

Figure 2 represent 5 component carriers in each direction, DL1,..., DL5 for the downlink direction and UL1, ..., UL5 in the uplink direction which are available for communication between the user equipment 111, 112 and the network equipment 12.

This limited number of component carriers has been chosen for sake of simplicity. It will be clear for a person skilled in the art that this description can be extended easily to any number of component carriers in each transmission direction. The component carriers are represented as non-contiguous component carriers, It will nevertheless be understood by a person skilled in the art that the invention may be implemented regardless of the fact that the component carriers are contiguous, non-contiguous or partly contiguous.

According to the present invention, at least one mapping rule is transmitted from the network equipment to the user equipment. The mapping rule may indicate, in the first place, the number of bits of a carrier indicator that is included in the control channel of a specific component carrier out of the different component carriers usable by the user equipment.

For example, 1 bit is used for a carrier indicator used in the control channel 211 of component carrier DL1 selecting out of the uplink component carriers available for communication to user equipment 111, 2 bits are used in 211 for a carrier indicator selecting out of the uplink component carriers available for communication to user equipment 111.

Secondly, the mapping rule may indicate a mapping between the carrier indicator and one (or more) component carriers to be used by the equipment.

This mapping rule is preferably represented by a mapping table stored in the network equipment and transmitted to the corresponding user equipment using preferably user specific configuration signaling like RRC signaling. Herewith radio resource control messages that are acknowledged by the UE are transmitted. Configurations like the mapping tables can thus UE specifically and securely be conveyed to the UE. Alternatively if configurations are the same per cell broadcast messages can be employed that configure at least a group of UEs simultaneously. In a more general way a semi-static signaling can be used for informing the user equipment of the mapping rule.

Alternatively, a selection of predefined rules can be stored in advance in both user and network equipments and labeled so that only a message indicating the label of the mapping rule to be used is communicated through RRC signaling to the corresponding user or network equipment.

A simple predefined rule could be that only 1 bit is used as carrier indicator on DL1 and all other DL component carrier. If the carrier indicator is 0, the default UL component carrier corresponding to the DL component carrier by which the carrier indicator is carried is to be used. If the carrier indicator is 1, the next higher component carrrier compared to the default UL component carrier is to be used. Any other kind of predefined rule can be imagined to map a carrier indicator to a concrete set of component carriers to be used.

On each component carrier DL1, ..., DL5 a sub-frame comprises a control channel 211, ..., 215. In LTE the control channel part of a LTE data sub-frame is preferably the PDCCH (physical downlink control channel). By extension and as known by persons skived in the art, any kind of sub-frame connected signaling in a sub-frame transmitted on a component carrier could be used as control channel in the framework of the present invention. In a more general way, dynamic signaling is used to send the carrier indicator.

Preferably, the carrier indicators both for the uplink and for the downlink are comprised in the control channel. The control channel further comprises information on resource allocation inside a component carrier as for example the position and number of sub carriers allocated inside a component carrier.

The control channel may comprise a carrier indicator according to the present invention. The number of bits of the carrier indicator is preferably lower than the number of bits necessary to represent the total number of component carriers available for use between the user equipment 111, 112 and the network equipment 12.

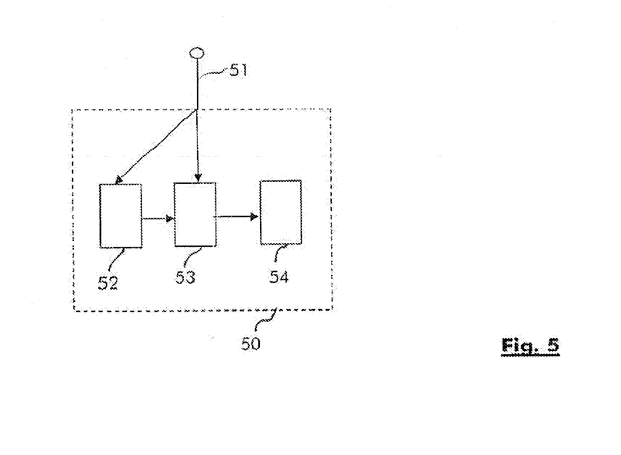

In the simplified example represented in figure 2, 5 component carriers are available for the uplink and 5 component carriers are available in the downlink so that at most 32 possible selections of component carriers (alone of in combination) exist for the uplink and consequently 5 bits would be necessary in the control channel to represent all component carriers combinations in the uplink. 5 bits would also be necessary in the control channel to represent all component carriers combinations in the downlink.

Instead and according to the present invention only a much more limited number of bits are sent as carrier indicator in the control channel. The highest number of bits of the carrier indication being defined on a per DL component carrier and on a per user equipment basis and corresponding at most to the number of bits necessary to represent the number of component carriers (alone or in combination) which the user equipment can support. Consequently, if the capability of a user equipment only provides for a support of two contiguous component carriers used non-simultaneously for the uplink and for the downlink, then only 1 bit carrier indicator for the uplink and 1 bit for the downlink is necessary according to the present invention to represent the component carriers in the control channel.

In addition, a mapping rule 221, 222 is made available to each user equipment 111, 112 and/or to the network equipment 12, which converts the carrier indicator received from the control channel to an indication to the component carrier where resource are allocated to the user equipment or to the allocated resources themselves.

For example as showed on Map. UE 2 UL on figure 2, 2 bits may be used for the carrier indicator in the control channel of a downlink sub-frame on DL1, value 00 is mapped by the mapping rule to the fact that UL1 only is to be used, value 01 is mapped by the mapping rule to the fact that UL2 only is to be used, value 10 is mapped to the fact that UL2 and UL1 have to be used simultaneously.

In another example, showed on Map. UE2 UL on figure 2, 2 bits may be used for the carrier indicator in the control channel of a downlink sub-frame on DL1, value 00 is mapped by the mapping rule to the fact that UL1 only is to be used value 01 is mapped by the mapping rule to the fact that UL2 only is to be used, value 10 is mapped to the fact that UL3 is used with the resource allocation that accompanied the carrier indicator. This kind of component carrier allocation is especially appropriate when the resource allocation on the component carrier accompanies the carrier indicator.

As a further example, on Map. UE 1 UL on figure 2, 1 single bit may be used for the carrier indicator in the control channel of a downlink sub-frame on DL1, value 0 is mapped by the mapping rule to the fact that UL1 is to be used and value 1 is mapped by the mapping rule to the fact that UL2 is to be used.

Figure 2 represent the component carrier allocation for the uplink direction in detail. The allocation for the downlink direction is similar and preferably happens in parallel.

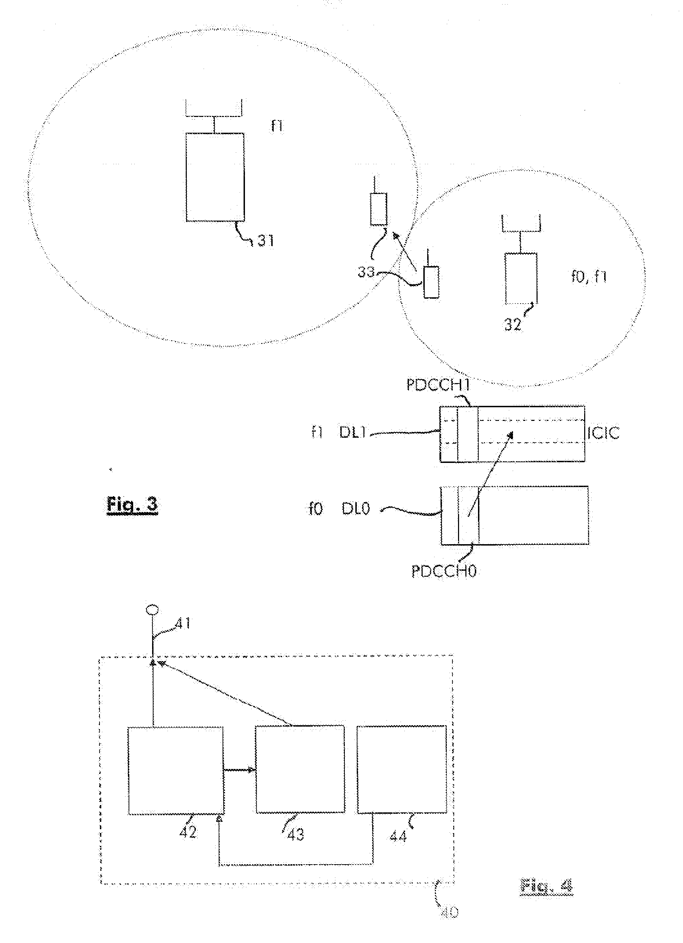

Figure 3 shows a scenario with coexisting macro and pico base stations in which the implementation of the present invention is advantageous.

Figure 3 shows a first network equipment 31 preferably a macro base station 31, a second network equipment 32 preferably a pico base station and a user equipment 33 at the cell border of both base stations 31, 32 mowing away from pico base station 32 towards macro base station 31. Pico base station 32 supports 2 downlink component carriers DL0, DL1 respectively around frequencies f0 and f1. Macro base station supports 1 downlink component carrier DL1 around frequency f1. Consequently, macro base station 31 and pico base station 32 interfere with each other on frequency f1.

Interference is more precisely generated by macro base station 31 due to a transmit power at a much higher level than pico base station 32. To reduce this interference, known measures of interference coordination may be taken. For example, Pico base station 32 is allocated only a subset of subcarriers in DL 1 for data transmission and Macro base station 31 is allocated a different non overlapping subset of subcarriers in DL1 for data transmission. The control channel field PDCCH1 nevertheless does not benefit from interference coordination measures so that it may be impossible for user equipment 33 to read signaling information from control channel PDCCH1 in DL1 sent by pico base station 32 due to the high interference generated by macro base station 31,

According to the present invention, control channel PDCCHO of DL0 comprises a carrier indicator destined to user equipment 33. In addition, according to the present invention user equipment 33 comprises a mapping rule which enables to convert the carrier indicator univocally to the component carrier DL1 that user equipment 33 should use to receive data. In this case the control channel PDCCH0 of DL0 would comprise 1 bit carrier indicator set to value 1. User equipment would comprise a mapping table mapping value 1 to downlink DL1.

Since there is no interference on frequency f0 between macro base station 31 and pico base station 32, user equipment 33 is able to get the carrier indicator properly an simultaneously user equipment 33 is able to receive data in DL1 around frequency f1 thank to the measure of inter cell interference coordination.

It will understood by those skilled in the art that this also applies to the uplink direction and that this also applies with a larger number of interfering base stations with a larger number of component carriers available in the network under the sole condition that at least one control channel is part of an interference free component carrier and can be used to allocate resource in a non-interference-free component carrier which is subject to inter cell interference coordination measures. This results in an increased spectrum use in the network.

Figure 4 details a network equipment according to the present invention.

Network equipment 40 comprises means 42 for generating at least one mapping rule for a user equipment dependent on the DL component carrier used for control signaling, which is identified as active in the radio communication network. The mapping rule is adapted to map a value of a carrier indicator in a specific DL component carrier to one of the component carriers available for a communication involving user equipment 40. Such means can be realized by mean of a processing unit having a memory storing the capabilities of user equipment 40 as well as the reference of the component carriers available in the network. Depending on this information the processing unit determines a mapping rule. Capability criteria which might be taken into consideration by the processing unit for determining the mapping rule could be: the capability by construction of the user equipment amplifier, system load status or UE buffer status, interference condition on specific component carriers, a user equipment priority group, user equipment pricing time or date of operation. These criteria may also be considered for determining the number of bits of the carrier indicator

Network equipment 40 further comprises means 43 for determining a carrier indicator for use by a user equipment and for including this carrier indicator in a control channel part of a data sub-frame exchanged between network equipment 40 and a user equipment. Means 43 can be implemented as a memory containing the mapping rule associated to a sub-frame building module. The sub-frame building module preferably generates a data sub.frame according to the sub-frame format of the corresponding communication standard. This data sub-frame format comprises a control channel part which in turn comprises the carrier indicator field. The value of the carrier indicator field is read out of the memory comprising the mapping table.

In a preferred embodiment network equipment 40 further comprises means 44 for defining or setting up user equipment specific component carrier sets available for a communication between the network equipment and a user equipment. This functionality does not necessary need to be supported by network equipment 40 but can be supported in a central equipment of the radio communication network.

At network equipment 40, a carrier and resource allocation module is preferably responsible to determine the appropriate component carrier(s) and sub carrier(s) which need to be allocated to a user equipment. The way the resource allocation is made going beyond the signaling part of the present invention is out of the scope of the present invention.

According to the present invention the length of the carrier indicator is at most equal to the number of bits which would be required to signal the total number of component carriers available for communication to a user equipment.

In a preferred embodiment of the present invention, network equipment 40 is a base station of the communication network or a E-Node B in case of a 3GPP LTE network. In this case, network equipment 40 further comprises a radio transceiver 41 adapted to forward the mapping rules to the user equipments as well as adapted to transmit data sub-frames containing the carrier indicator in the control channel to the user equipments.

Alternatively, network, equipment 40 can be a base station controller using the base station to convey transparently the mapping rules and the control indicator generated according to the present invention to the user equipment.

Figure 5 shows a user equipment according to the present invention.

User equipment 50 comprises a radio interface 51 and is adapted to be used in a mobile radio communication network supporting a plurality of component carriers. User equipment 50 comprises means 52 for receiving and storing one or more mapping rules which maps a value of a carrier indicator to one or more of component carriers set up to be available for communication with user equipment 50. Such means could be a memory adapted to store a signaling message containing the mapping rule as well as a decoder for extracting the mapping rule contained in the message.

User equipment 50 further comprises means 53 for identifying and extracting a carrier indicator out of a control channel. Such means could be a decoder extracting out of a data sub-frame the control channel part and extracting out of the control channel part the carrier indicator based on the downlink component carrier specific and UL/DL direction specific carrier indicator size. A decoder using blind decoding would be the preferred solution.

User equipment 50 further comprises means 54 for determining one or more component carriers to be used based on the mapping rule and on the carrier indicator value. Such means could be a memory adapted to store a mapping table.

The present invention is usable in FDD and TDD modes of operation of a radio communication network. In TDD mode, at least the component carriers used for UL direction should be a subset of the component carrier of the DL direction. Indeed in TDD mode, one sub-frame comprises a first part dedicated to the downlink communication. and a second part dedicated to the uplink communication. In FDD mode, UL and DL component carrier allocations are independent of each other.

The present invention is preferably used in OFDM based networks nevertheless it can be used in any TDM, FDM, CDM based radio communication network as far a multiple carrier operation is available.

## Claims

1. Method for signaling carrier aggregation in a radio communication network supporting a plurality of component carriers (DL1, ..., DL5, UL1, ..., UL5), at least two component carriers being available for communication between a network equipment (12) and a user equipment (111, 112), at least one component carrier supporting a control channel 211, ..., 215) for signalling resources, said method comprising the steps of:
- generating at least one mapping rule (Map. UE 1 UL, Map UE2 UL) for said user equipment (111, 112), said mapping rule mapping values of said carrier indicator (CI) to one of said component carriers available for communication between said network equipment (12) and said user equipment (111, 112);
- forwarding said at least one mapping rule (Map. UE 1 UL, Map UE2 UL) to said user equipment (111, 112);
- including a Carrier Indicator (CI) in said control channel (211, ..., 215), the length of the carrier indicator being at most equal to the number of bits which would be required to signal the total number of component carriers available for the communication between said user equipment and said network equipment;
- determining at the user equipment (111, 112) one or more component carriers (DL1, ..., DL5, UL1, ..., UL5) to be used by said user equipment (111, 112) based on said carrier indicator and on said at least one mapping rule Map. UE 1 UL, Map UE2 UL).

2. Method according to claim 1, further comprising the step of determining said component carriers (DL1, ..., DL5, UL1, ..., UL5) available for communication between said user equipment (111, 112) and said network equipment (12) and making said determination available for the definition of said mapping rule Map. UE 1 UL, Map UE2 UL).

3. Method according to claim 1 or any of the previous claims, wherein the length of said carrier indicator is smaller than the number of bits which would be required to signal the total number of component carriers available for the communication between said user equipment and said network equipment.

4. Method according to claim 1 or any of the previous claims, wherein said mapping rule is communicated to said user equipment and or said network equipment by using user specific configuration signaling messages or broadcast messages.

5. Method according to claim 1 or any of the previous claims, wherein said control channel is a PDCCH channel transmitted as part of a 3GPP LTE sub-frame.

6. Method according to claim 1 or any of the previous claims, wherein said at least one mapping rule includes an indication related to the length of the carrier indicator that is destined to said user equipment.

7. Method according to claim 1 or any of the previous claims, wherein said user equipment is informed by a user specific configuration signaling and or by broadcast messages on the length of the carrier indicator field in said control channel for each of the component carriers available for the communication between said user equipment and said network equipment.

8. Method according to claim 1 or any of the previous claims, wherein said length of the carrier indicator field in the control channel of a component carrier and/or said mapping rule is configured dynamically by the network equipment and transmitted to the user equipment based on a predefined criteria preferably belonging to the list of system load status, UE buffer status, interference condition on specific component carriers, a user priority group, user pricing time, date of operation.

9. Method according to claim 1 or any of the previous claims, wherein said carrier indicator is carried by the control channel of a first component carrier while said mapping rule is taken into account for allocating resources on the data field of a second component carrier protected by inter cell interference coordination.

10. Network equipment (40) adapted to be used in a radio communication network supporting a plurality of component carriers (DL1, ..., DL5, UL1, ..., UL5), at least two component carriers, being available for communication between said network equipment (40) and a user equipment (50), at least one component carrier supporting a control channel (211, ..., 215) or signalling resources, said network equipment comprising:
- means (42) for generating at least one mapping rule for said user equipment, said mapping rule mapping values of said carrier indicator (CI) to one of said component carriers available for communication between said network equipment and said user equipment;
- means (41) for forwarding said at least one mapping rule to said user equipment;
- means (43) for determining a carrier indicator for said user equipment and including said carrier indicator in said control channel, the length of the carrier indicator being at most equal to the number of bits which would be required to signal the total number of component carriers available for the communication between said user equipment and said network equipment.

11. Network equipment according to claim 7, being a E-Node B in a 3GPP LTE network.

12. User equipment (50) adapted to be used in a radio communication network supporting a plurality of component carriers (DL1, ..., DL5, UL1, ..., UL5), at least two component carriers being available for communication between a network equipment (40) and said user equipment (50), at least one component carrier supporting a control channel (211, ..., 215) for signalling resource, said user equipment (50) comprising:
- means (52) for receiving and storing at least one mapping rule, said mapping rule mapping values of said carrier indicator to one of said component carriers available for communication between said network equipment and said user equipment;
- means (53) for identifying and extracting a carrier indicator on said control channel and means (54) determining one or more component carriers to be used based on said mapping rule and on said carrier indicator.

13. User equipment according to claim 12, further comprising means for receiving or obtaining the set of component carriers to be used for communication between said user equipment and said network equipment.
